(19) **Europäisches Patentamt / European Patent Office / Office européen des brevets**

(11) **EP 4 696 745 A1**

(12) # EUROPEAN PATENT APPLICATION

(43) Date of publication:
**18.02.2026 Bulletin 2026/08**

(21) Application number: **24194933.8**

(22) Date of filing: **16.08.2024**

(51) International Patent Classification (IPC):
***C08L 67/02*** *(2006.01)*

(52) Cooperative Patent Classification (CPC):
(C-Sets available)
**C08L 67/02;** C08G 64/10; C08G 77/448;
C08L 2205/025; C08L 2205/035          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **HOU, Lu**
  **Shanghai (CN)**
- **CHENG, Yunan**
  **Shanghai (CN)**
- **ZHENG, Yun**
  **Shanghai (CN)**

(74) Representative: **Modiano, Gabriella Diana**
**Modiano & Partners SA**
**Steinsdorfstraße 14**
**80538 München (DE)**

(54) **THERMOPLASTIC POLYMER COMPOSITIONS HAVING LOW WARPAGE AND GOOD CHEMICAL RESISTANCE PROPERTIES**

(57)    Thermoplastic compositions include: a) from about 30 wt% to about 60 wt% of at least one crystalline or semi-crystalline polymer; b) from about 5 wt% to about 20 wt% of at least one polycarbonate-siloxane copolymer; and c) from greater than 5 wt% to less than 25 wt% of a polyetherimide (PEI) polymer. The combined weight percent value of all components does not exceed 100 wt%, and all weight percent values are based on the total weight of the composition. The compositions have low warpage and good chemical resistance properties.

FIG. 1A

EP 4 696 745 A1

(52) Cooperative Patent Classification (CPC): (Cont.)

C-Sets
**C08L 67/02, C08L 67/02, C08L 69/00, C08L 83/10,
C08L 79/08, C08L 51/04, C08K 3/2279**

## Description

### FIELD OF THE DISCLOSURE

The present disclosure relates to thermoplastic compositions having low warpage and good chemical resistance properties, and in particular to thermoplastic compositions including a crystalline or semi-crystalline polymer, a polycarbonate-siloxane copolymer, and a polyetherimide polymer.

### BACKGROUND OF THE DISCLOSURE

Thermoplastic polymer blends including polybutylene terephthalate (PBT) and polycarbonate (PC) are widely used as medical device materials because they provide a good balance of mechanical and chemical resistance properties. In recent years, there has been an increase in concern regarding the problem of medical device deformation caused by excessive shrinkage of articles based on PBT/PC blends. Cracking problems also result from the fact that such devices are disinfected much more often than articles in other applications. Accordingly, compositions having low warpage and enhanced chemical resistance are desired for use in medical devices. Conventional methods to lower shrinkage of PBT/PC blends include lowering the ratio of the crystalline polymer (e.g., PBT). However, decreasing the ratio of crystalline polymer can result in a decrease in the chemical resistance of the composition.

These and other shortcomings are addressed by aspects of the present disclosure.

### SUMMARY

Aspects of the disclosure relate to thermoplastic compositions including: a) from about 30 wt% to about 60 wt% of at least one crystalline or semi-crystalline polymer; b) from about 5 wt% to about 20 wt% of at least one polycarbonate-siloxane copolymer; and c) from greater than 5 wt% to less than 25 wt% of a polyetherimide (PEI) polymer. The combined weight percent value of all components does not exceed 100 wt%, and all weight percent values are based on the total weight of the composition. The compositions have low warpage and good chemical resistance properties.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A-1E are images showing warpage properties of comparative and example compositions according to aspects of the present disclosure.
FIGS. 2A-2D are images showing examples of chemical resistance crack ratings used to evaluate the comparative and example compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate-siloxane copolymer" includes mixtures of two or more polycarbonate-siloxane copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units," used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure include thermoplastic compositions including: a) from about 30 wt% to about 60 wt% of at least one crystalline or semi-crystalline polymer; b) from about 5 wt% to about 20 wt% of at least one polycarbonate-siloxane copolymer; and c) from greater than 5 wt% to less than 25 wt% of a polyetherimide (PEI) polymer. The combined weight percent value of all components does not exceed 100 wt%, and all weight percent values are based on the total weight of the composition.

In some aspects the crystalline or semi-crystalline polymer includes polyamide, polyester, polypropylene, copolymers thereof, or a combination thereof. Suitable polyesters include, but are not limited to, polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof. PCT is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA).

In specific aspects the at least one crystalline or semi-crystalline polymer includes at least one PBT polymer.

In certain aspects the PBT component includes a high flow PBT having an intrinsic viscosity of less than 1.0 deciliters per gram (dl/g) and a low flow PBT having an intrinsic viscosity of at least 1.0 dl/g. Intrinsic viscosity may be measured in a 60:40 phenol/tetrachloroethane mixture in accordance with ASTM D2857. In some aspects the high flow PBT has an intrinsic viscosity of less than 0.95 dl/g, or less than 0.9 dl/g, or less than 0.85 dl/g, or less than 0.8 dl/g, or less than 0.75 dl/g, or less than 0.7 dl/g, or about 0.66 dl/g. In further aspects the low flow PBT has an intrinsic viscosity of at least 1.05 dl/g, or at least 1.10 dl/g, or at least 1.15 dl/g, or about 1.2 dl/g.

In specific aspects the composition includes a low flow PBT (e.g., PBT315) and a high flow PBT (e.g., PBT195) in a ratio of from 10 to 1 (10:1) to 1 to 2 (1:2), such as but not limited to, 10:1 (low flow PBT to high flow PBT), 9:1, 8:1, 7:1, 6:1, 5:1, 4:1, 3:1, 2:1, 1:1, 0.9:1, 0.8:1, 0.7:1, 0.6:1, 0.5:1, 0.4:1, 0.3:1, 0.2:1, or 0.1:1. Ranges selected from these ratios are also possible.

In some aspects the composition includes from about 30 wt% to about 60 wt% of the at least one crystalline or semi-crystalline polymer. In further aspects the composition includes at least 30 wt%, or at least 31 wt%, or at least 32 wt%, or at least 33 wt%, or at least 34 wt%, or at least 35 wt%, or at least 36 wt%, or at least 37 wt%, or at least 38 wt%, or at least 39 wt%, or at least 40 wt%, or at least 41 wt%, or at least 42 wt%, or at least 43 wt%, or at least 44 wt%, or at least 45 wt%, or at least 46 wt%, or at least 47 wt%, or at least 48 wt%, or at least 49 wt%, or at least 50 wt%, or at most 60 wt%, or at most 59 wt%, or at most 58 wt%, or at most 57 wt%, or at most 56 wt%, or at most 55 wt%, or at most 54 wt%, or at most 53 wt%, or at most 52 wt%, or at most 51 wt%, or at most 50 wt%, or at most 49 wt%, or at most 48 wt%, or at most 47 wt%, or at most 46 wt%, or at most 45 wt%, or at most 44 wt%, or at most 43 wt%, or at most 42 wt%, or at most 41 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, of the at least one crystalline or semi-crystalline polymer.

In the present application the conventional understanding of "crystalline," "semi-crystalline" and "amorphous" polymers is used. For example, crystalline polymers are identified as having very high crystallinities (e.g., 95-99%). Crystalline polymers are rigid and have high melting temperatures. They are less affected by solvent penetration. Semi-crystalline polymers have both crystalline and amorphous regions. Semi-crystalline polymers combine the strength of crystalline polymers with the flexibility of amorphous polymers. Semi-crystalline polymers can be tough with an ability to bend without breaking. Amorphous polymers have polymer chains with branches or irregular groups that cannot pack together regularly enough to form crystals. Amorphous regions of a polymer are made up of a randomly coiled and entangled chains; they are softer and have lower melting points than crystalline and semi-crystalline polymers.

Compositions according to aspects of the disclosure include from about 5 wt% to about 20 wt% of at least one polycarbonate-siloxane copolymer. In some aspects the polycarbonate copolymer component includes a polycarbonate-siloxane copolymer having a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC).

In specific aspects the polycarbonate-siloxane copolymer has a siloxane content of from about 35 wt% to about 45 wt%, or from about 38 wt% to about 42 wt%.

In further aspects the composition includes at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the polycarbonate-siloxane copolymer.

In some aspects the composition includes from greater than 5 wt% to less than 25 wt% of a polyetherimide (PEI) polymer. As used herein, "polyetherimide" (PEI) refers to polymers and/or copolymers containing ether and optionally substituted imide functional groups in the backbone of the polymer. An exemplary PEI resin is available from SABIC under the Ultem™ trade name. In further aspects the PEI polymer includes a PEI homopolymer, a PEI copolymer, or a combination thereof. In other aspects the composition includes greater than 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or less than 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the PEI polymer. In a specific aspect the composition includes from about 10 wt% to about 20 wt% of the PEI polymer.

In certain aspects the composition further includes an additional polycarbonate (PC) component in addition to the polycarbonate-siloxane copolymer. The additional PC component may include a polycarbonate homopolymer or a polycarbonate copolymer that is different from the polycarbonate-siloxane copolymer described herein. The additional PC component, if present may be present in an amount of from greater than 0 wt% to about 20 wt% of the additional PC component. In specific aspects the composition includes at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the additional PC component.

In some aspects the composition further includes from greater than 0 wt% to about 25 wt% of a flame retardant (FR) component. In further aspects the FR component includes a brominated FR component, a phosphorous FR component, or a combination thereof.

Exemplary brominated FR components include, but are not limited to, brominated polycarbonates, brominated polyacrylates, brominated cyanurates, or combinations thereof. In specific aspects the composition includes a brominated polycarbonate.

In certain aspects the brominated FR component includes from about 10 wt% to about 85 wt% bromine, such as at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at least 75 wt%, or at least 80 wt%, or at most 90 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt% bromine. An exemplary brominated FR component includes brominated PC (105B-111N) containing 26% bromine, available from SABIC. Other exemplary brominated FR components include, but are not limited to, aromatic brominated FR (BFR), tetrabromobisphenol A (TBBPA), pentapromodiphenylether (PBDE), polybrominated biphenyl (PBB), aliphatic BFR, and cycloaliphatic BFR such as hexabromocyclododecane (HBCD).

In certain aspects the composition has a total bromine content of from greater than 0 wt% to about 20 wt%, such as at least 0.1 wt%, or at least 0.5 wt%, or at least 1.0 wt%, or at least 1.5 wt%, or at least 2.0 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt% bromine.

Exemplary phosphorous FR components include, but are not limited to, aluminum diethylphosphinate (ADP), melamine polyphosphate (MPP), bisphenol-A bis(diphenyl phosphate) (BPADP), tetraphenyl m-phenylene bis(phosphate) (RDP), phosphazene, or a combination thereof.

In some aspects the composition includes at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at least 16 wt%, or at least 17 wt%, or at least 18 wt%, or at least 19 wt%, or at least 20 wt%, or at most 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the FR component.

In certain aspects the composition further includes from greater than 0 wt% to about 15 wt% of an impact modifier component. Common impact modifiers that can improve the impact performance of the composition include ethylene copolymer (ethylene-propylene, ethylene-butene, ethylene-hexene, ethylene-octene copolymers, etc.), ethylene propylene diene monomer (EPDM) rubber (saturated or unsaturated), styrenic copolymers such as SEBS (styrene-ethylene-butylene-styrene), MBS (methacrylate-butadiene-styrene), etc., ethylene-acrylic copolymers, ionomers (including the "super touch nylon" developed by DuPont) and others (thermoplastic polyurethane, silicone rubber, etc.). In a specific aspect the impact modifier component includes MBS.

In some aspects the composition includes at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, of the impact modifier component.

Compositions according to aspects of the disclosure may further include from greater than 0 wt% to about 10 wt% of a flame retardant (FR) synergist component. In some aspects the FR synergist is an inorganic antimony compound. Such compounds are widely available or can be made according to conventional methods. Typical inorganic synergist compounds include $Sb_2O_5$, $SbS_3$, and the like. In a particular aspect the FR synergist is antimony trioxide ($Sb_2O_3$). In a specific aspect the FR synergist is masterbatch including antimony trioxide ($Sb_2O_3$) and ethyl vinyl acetate (EVA).

In particular aspects the composition includes at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, of the FR synergist component.

In some aspects the composition includes at least one additional additive which may include, but is not limited to, an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a reinforcing agent, or a combination thereof. The at least one additional additive may be present in the composition in an amount of from greater than 0 wt% to about 10 wt%, such as at least 0.1 wt%, or at least 0.3 wt%, or at least 0.5 wt%, or at least 0.7 wt%, or at least 1 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%.

Compositions according to aspects of the disclosure may have improved impact strength as compared to conventional compositions. In some aspects the composition has a notched Izod impact (NII) strength of at least 250 joules per meter (J/m) at 23 °C as tested in accordance with ASTM D256. In further aspects the composition has a NII strength of from 250-1000 J/m, or at least 275 J/m, or at least 300 J/m, or at least 350 J/m, or at least 400 J/m, or at least 450 J/m, or at least 500 J/m, or at least 550 J/m, or at least 600 J/m, or at least 650 J/m, or at least 700 J/m, or at least 750 J/m, or at least 800 J/m, or at least 850 J/m, or at most 100 J/m, or at most 900 J/m.

Plaques molded from the disclosed composition may exhibit low warpage properties. Warpage can be defined as a dimensional distortion in a molded product after it is ejected from the mold at the end of the injection molding process. With an increasing focus on thin-walled products, control over the dimensional stability becomes increasingly important. For example, a molded sample may exhibit lower warpage value in terms of one or both of average value and standard deviation, as compared to a comparative composition that does not include the amorphous polymer. In further aspects, warpage may be determined by observing the magnitude (visually or quantitatively) of lift off away from a planar surface at which a molded part including the composition is placed.

Warpage may be evaluated on a molded sample disk having 135 mm diameter and 1.2 mm thickness according to a SABIC Method, in which: a disk is placed on a flat surface and four points (A, B, C, D) are marked equidistantly along the disk edge; one point D is pressed into the surface elevating the remaining points along the disk edge; the magnitude of the distance of each point A, B, and C to the flat surface is obtained to provide the warpage; and average value and standard deviation of warpage A, B and C is calculated.

Thus, in some aspects a molded sample of the composition exhibits a lower warpage than the warpage observed for a reference molded sample that does not include the PEI component, wherein warpage is determined according to the SABIC Method. In specific aspects a molded sample including the polymer composition may exhibit an average warpage of no more than 0.060 in, or no more than 0.059 in, or no more than 0.058 in, or no more than 0.057 in, or no more than 0.056 in, or no more than 0.055 in, or no more than 0.054 in, or no more than 0.053 in, or no more than 0.052 in, or no more than 0.051 in, or no more than 0.050 in, or no more than 0.049 in, or no more than 0.048 in, or no more than 0.047 in, or no more than 0.046 in, or no more than 0.045 in, as determined according to the SABIC Method.

In some aspects the composition has improved chemical resistance as compared to comparative compositions that include another amorphous polymer such as polycarbonate instead of the PEI component. Chemical resistance may be evaluated using an environmental stress cracking resistance (ESCR) method according to ASTM D543. Retention of tensile stress at yield and tensile elongation at break may be evaluated as compared to a control composition (e.g., a composition that does not include the PEI component). The following ratings may be used:

**Compatibility Ratings for Chemical Resistance**

| Rating | Retention Tensile Stress at Yield (%) | Retention Tensile Elongation at Break (%) |
|---|---|---|
| Compatible | ≥ 90 | 80-139 |
| Marginal | 80-89 | 65-79 |
| Not Compatible | ≤ 79 | ≤ 64 or > 140 |

Accordingly, in some aspects the composition has a tensile stress at yield retention of at least 90% or a tensile elongation at break retention of between 80% and 139%, wherein tensile stress at yield and tensile elongation at break are evaluated before and after exposure to a germicide for 7 days under a 1% strain according to ASTM D543, and wherein tensile stress at yield and tensile elongation at break are evaluated according to ASTM D638.

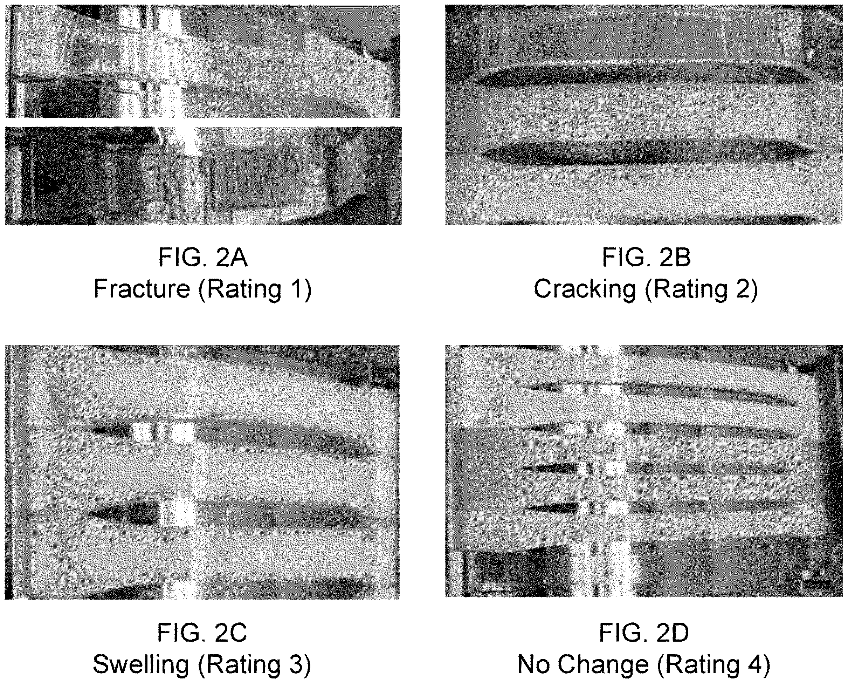

Chemical resistance may also be evaluated by a visual analysis of samples after exposure for 7 or 14 days under a strain of 1.0% or 1.5% in accordance with ASTM D543. The samples may be visually observed after an indicated time period and a rating of 1-4 assigned to the samples according to the following: Rating 1-fracture; Rating 2-cracking; Rating 3-swelling; Rating 4-no change. FIGS. 2A-2D are images showing examples of each rating category. Accordingly, in some aspects the composition has equivalent chemical resistance as compared to a comparative composition that does not include the PEI polymer, wherein equivalent chemical resistance means that the composition has the same chemical resistance rating as the comparative composition.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where they may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a component of a medical device.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

   a) from about 30 wt% to about 60 wt% of at least one crystalline or semi-crystalline polymer;
   b) from about 5 wt% to about 20 wt% of at least one polycarbonate-siloxane copolymer; and
   c) from greater than 5 wt% to less than 25 wt% of a polyetherimide (PEI) polymer,

wherein the combined weight percent value of all components does not exceed 100 wt%, and all weight percent values are based on the total weight of the composition.

Aspect 2. The thermoplastic composition according to Aspect 1, wherein the at least one crystalline or semi-crystalline polymer comprises a polyamide, polyester, polypropylene, copolymers thereof, or a combination thereof.

Aspect 3. The thermoplastic composition according to Aspect 2, wherein the polyester comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

Aspect 4. The thermoplastic composition according to any of Aspects 1 to 3, wherein the at least one crystalline or semi-crystalline polymer comprises at least one PBT polymer.

Aspect 5. The thermoplastic composition according to any of Aspects 1 to 4, wherein the polycarbonate-siloxane copolymer has a siloxane content of from about 5 wt% to about 45 wt%.

Aspect 6. The thermoplastic composition according to Aspect 5, wherein the polycarbonate-siloxane copolymer has a siloxane content of from about 35 wt% to about 45 wt%.

Aspect 7. The thermoplastic composition according to any of Aspects 1 to 6, wherein the composition comprises from about 12 wt% to about 18 wt% of the polycarbonate-siloxane copolymer.

Aspect 8. The thermoplastic composition according to any of Aspects 1 to 7, wherein the PEI polymer comprises a PEI homopolymer, a PEI copolymer, or a combination thereof.

Aspect 9. The thermoplastic composition according to any of Aspects 1 to 8, wherein the composition comprises from about 10 wt% to about 20 wt% of the PEI polymer.

Aspect 10. The thermoplastic composition according to any of Aspects 1 to 9, wherein the composition further comprises an additional polycarbonate (PC) component in addition to the polycarbonate-siloxane copolymer.

Aspect 11. The thermoplastic composition according to Aspect 10, wherein the composition comprises from greater than 0 wt% to about 20 wt% of the additional PC component.

Aspect 12. The thermoplastic composition according to any of Aspects 1 to 11, wherein the composition further comprises from greater than 0 wt% to about 25 wt% of a flame retardant (FR) component.

Aspect 13. The thermoplastic composition according to Aspect 12, wherein the FR component comprises a brominated FR component, a phosphorous FR component, or a combination thereof.

Aspect 14. The thermoplastic composition according to Aspect 13, wherein the composition comprises a brominated FR component comprising polycarbonate.

Aspect 15. The thermoplastic composition according to any of Aspects 1 to 14, wherein the composition further comprises from greater than 0 wt% to about 15 wt% of an impact modifier component.

Aspect 16. The thermoplastic composition according to Aspect 15, wherein the impact modifier component comprises methacrylate-butadiene-styrene (MBS).

Aspect 17. The thermoplastic composition according to any of Aspects 1 to 16, wherein the composition further comprises from greater than 0 wt% to about 10 wt% of a flame retardant (FR) synergist component.

Aspect 18. The thermoplastic composition according to Aspect 17, wherein the FR synergist component comprises an inorganic antimony compound.

Aspect 19. The thermoplastic composition according to any of Aspects 1 to 18, wherein the composition comprises at least one additional additive comprising an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a reinforcing agent, or a combination thereof.

Aspect 20. The thermoplastic composition according to any of Aspects 1 to 19, wherein the composition has a notched Izod impact strength of at least 250 joules per meter (J/m) at 23 °C as tested in accordance with ASTM D256.

Aspect 21. The thermoplastic composition according to any of Aspects 1 to 20, wherein the composition has an average warpage of no more than 0.06 inches (in) as evaluated according to a SABIC Method.

Aspect 22. The thermoplastic composition according to any of Aspects 1 to 21, wherein the composition has a tensile stress at yield retention of at least 90% or a tensile elongation at break retention of between 80% and 139%, wherein tensile stress at yield and tensile elongation at break are evaluated before and after exposure to a germicide for 7 days under a 1% strain according to ASTM D543, and wherein tensile stress at yield and tensile elongation at break are evaluated according to ASTM D638.

Aspect 23. The thermoplastic composition according to any of Aspects 1 to 22, wherein the composition has equivalent chemical resistance as compared to a comparative composition that does not include the PEI polymer.

Aspect 24. An article comprising the thermoplastic composition according to any of Aspects 1 to 23.

Aspect 25. The article according to Aspect 24, wherein the article is a component of a medical device.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative and example compositions described herein included one or more of the components listed in Table 1:

**Table 1 - Components**

| Component | Description | Source |
|---|---|---|
| PBT315 | Valox™ VX315-1001, low flow PBT | SABIC |
| PBT195 | Valox™ VX195-1001, high flow PBT | SABIC |
| PEI | Ultem™ 1010CP-1000, polyetherimide | SABIC |
| Br-PC | Brominated PC, 105B-111N, flame retardant, 26 wt% bromine | SABIC |
| PC-Si | Polycarbonate-siloxane copolymer (40 wt% siloxane) | SABIC |
| MBS | Methacrylate-butadiene-styrene, impact modifier | DOW |
| FR Syn | Flame retardant synergist, $Sb_2O_3$/ethyl vinyl acetate masterbatch | Sifine Co. |
| Additive | Styrene-acrylonitrile encapsulated polytetrafluoroethylene (TSAN) (anti-drip), pentaerythritol tetrastearate (PETS) (mold release), mono zinc phosphate (MZP) (transesterification quenching agent), Irganox® 1010 (antioxidant) | Various |

The compositions in Table 2 were molded into samples from extruded pellets:

**Table 2 - Comparative and Example Compositions**

| Description | C1 | C2 | E1 | E2 | E3 |
|---|---|---|---|---|---|
| PBT 315 | 35.65 | 33.65 | 30.65 | 27.65 | 24.65 |
| PBT 195 | 15 | 12 | 10 | 8 | 6 |
| PEI | | 5 | 10 | 15 | 20 |
| Br-PC | 20 | 20 | 20 | 20 | 20 |
| PC-Si | 15 | 15 | 15 | 15 | 15 |
| MBS | 8 | 8 | 8 | 8 | 8 |
| FR Syn | 5.55 | 5.55 | 5.55 | 5.55 | 5.55 |
| Additive | 0.8 | 0.8 | 0.8 | 0.8 | 0.8 |
| **Total (wt%)** | 100 | 100 | 100 | 100 | 100 |
| **Total Br content (wt%)** | 5.2 | 5.2 | 5.2 | 5.2 | 5.2 |

Mechanical and other properties of the Table 2 compositions were evaluated. Specific gravity was evaluated according to ASTM D792; results are reported in grams per cubic centimeter ($g/cm^3$). Melt volume rate (MVR) was evaluated at 260 °C using a 2.16 kilogram (kg) load for 360 seconds according to ASTM D1238; results are provided in cubic centimeters per 10 minutes ($cm^3/10$ min). Heat distortion temperature (HDT) was evaluated at 0.45 megapascals (MPa) or 1.82 MPa using a 3.2 millimeter (mm) test bar according to ASTM D648; results are provided in °C. Flexural properties were evaluated according to ASTM D790; results are provided in MPa. Tensile properties were evaluated according to ASTM D638; results are provided in MPa (modulus and strength) or as a percentage (%) (elongation at break). Notched Izod impact (NII) and Unnotched Izod impact (UNII) strength were evaluated at the indicated temperature using a pendulum energy of 5 pound-force per ft (lbf/ft) in accordance with ASTM D256; results are provided in Joules per meter (J/m).

Warpage was evaluated on a molded sample disk having 135 mm diameter and 1.2 mm thickness according to a SABIC Method according to the following description: the disk was placed on a flat surface and four points (A, B, C, D) were marked equidistantly along the disk edge; one point D was pressed into the surface elevating the remaining points along the disk edge; the magnitude of the distance of each point A, B, and C to the flat surface was obtained (in inches (in)) to provide the warpage; and average value and standard deviation of warpage A, B and C was calculated.

Properties of the compositions are provided in Table 3:

**Table 3 - Properties of Table 2 Compositions**

| Property/Conditions | Test Method | Unit | C1 | C2 | E1 | E2 | E3 |
|---|---|---|---|---|---|---|---|
| Specific Gravity | ASTM D792 | g/cm$^3$ | 1.308 | 1.303 | 1.301 | 1.294 | 1.298 |
| MVR, 260 °C, 2.16 kg, 360 seconds | ASTM D1238 | cm$^3$/10min | 6.2 | 3.94 | 3.27 | 2.48 | 2.14 |
| HDT, 0.45 MPa, 3.2 mm | ASTM D648 | °C | 107 | 107 | 96 | 101 | 102 |
| HDT, 1.82 MPa, 3.2 mm | ASTM D648 | °C | 61.4 | 64.8 | 68.2 | 73.6 | 76.4 |
| Flexural Modulus | ASTM D790 | MPa | 1720 | 1750 | 1740 | 1810 | 1840 |
| Flexural Strength at yield | ASTM D790 | MPa | 61.9 | 64.2 | 66.7 | 68.1 | 70.2 |
| Tensile Modulus | ASTM D638 | MPa | 1928.2 | 1934 | 1935.6 | 1930.6 | 1918 |
| Tensile Strength at break | ASTM D638 | MPa | 36.5 | 37.4 | 38.5 | 40.2 | 40.9 |
| Tensile Elongation at break | ASTM D638 | % | 17.2 | 38 | 42.72 | 51.32 | 52.7 |
| NII, 23 °C, 5 lbf/ft | ASTM D256 | J/m | 219 | 303 | 506 | 557 | 896 |
| UNII, 23 °C, 5 lbf/ft | ASTM D256 | J/m | 2130 | 2150 | 2160 | 2160 | 2160 |
| NII, -20 °C, 5 lbf/ft | ASTM D256 | J/m | 161 | 186 | 211 | 216 | 215 |
| Warpage | SABIC Method | | | | | | |
| A | | in | 0.085 | 0.098 | 0.060 | 0.079 | 0.025 |
| B | | in | 0.096 | 0.087 | 0.039 | 0.071 | 0.027 |
| C | | in | 0.009 | 0.005 | 0.059 | 0.027 | 0.080 |
| Average | | in | 0.063 | 0.063 | 0.053 | 0.059 | 0.044 |
| Standard deviation | | in | 0.039 | 0.041 | 0.0096 | 0.023 | 0.025 |

Environmental stress crack resistance (ESCR) properties of the Table 2 compositions were evaluated after exposure to 7 days to Sani-Cloth® AF3 germicide under a 1% strain in accordance with ASTM D543. The tensile stress at yield and elongation at break properties were evaluated before and after the chemical exposure; the percent retention of these properties was calculated and is presented in Table 4:

**Table 4 - ESCR Properties**

| Chemicals | Strain (%) | Exposure (Days) | Retention (%) | C1 | C2 | E1 | E2 | E3 |
|---|---|---|---|---|---|---|---|---|
| Sani-Cloth® AF3 | 1.0 | 7 | Tensile stress at yield | 100.2 | 101.5 | 101 | 100.2 | 100 |
| | | | Tensile Elongation at break | 125.4 | 88.8 | 76.8 | 87.4 | 131.3 |

Chemical resistance was also evaluated by a visual analysis of the samples after exposure for 7 or 14 days under a strain of 1.0% or 1.5% in accordance with ASTM D543. The following chemicals were evaluated: Sani-Cloth® AF3 (germicide); Nivea SPF 30 (sunscreen); Deep Woods Off!® (insect repellant); Fuchs DOT4 (brake fluid); and olive oil. The samples were visually observed after the indicated time period and a rating of 1-4 was assigned to the samples according to the following: fracture (1); cracking (2); Swelling (3); and No change (4). FIGS. 2A-2D are images showing examples of each rating category. Crack ratings for the compositions are presented in Table 5:

**Table 5 - Crack Rating After Chemical Exposure**

| Chemical | Strain (%) | Exposure (Days) | Crack Rating | | | | |
|---|---|---|---|---|---|---|---|
| | | | C1 | C2 | E1 | E2 | E3 |
| Sani-Cloth® AF3 | 1.0 | 7 | 4 | 4 | 4 | 4 | 4 |
| Sani-Cloth® AF3 | 1.5 | 14 | 4 | 4 | 4 | 4 | 4 |
| Nivea SPF 30 | 1.5 | 14 | 4 | 4 | 4 | 4 | 4 |
| Deep Woods Off!® | 1.5 | 14 | 4 | 4 | 4 | 4 | 4 |
| Fuchs DOT4 | 1.5 | 14 | 4 | 4 | 4 | 4 | 4 |
| Olive Oil | 1.5 | 14 | 4 | 4 | 4 | 4 | 4 |

From the results in Tables 3-5 it was observed that the example compositions E1-E3 which included greater than 5 wt% PEI had good mechanical properties and high chemical resistance. In particular, the example compositions had substantially improved impact (NII) properties at room temperature (23 °C) and at very low temperatures (-20 °C). NII properties generally increased with increasing PEI content. In particular, example composition E3 including 20 wt% PEI had an NII improvement of more than 400% at 23 °C. The tensile and elongation properties were also higher for the example compositions.

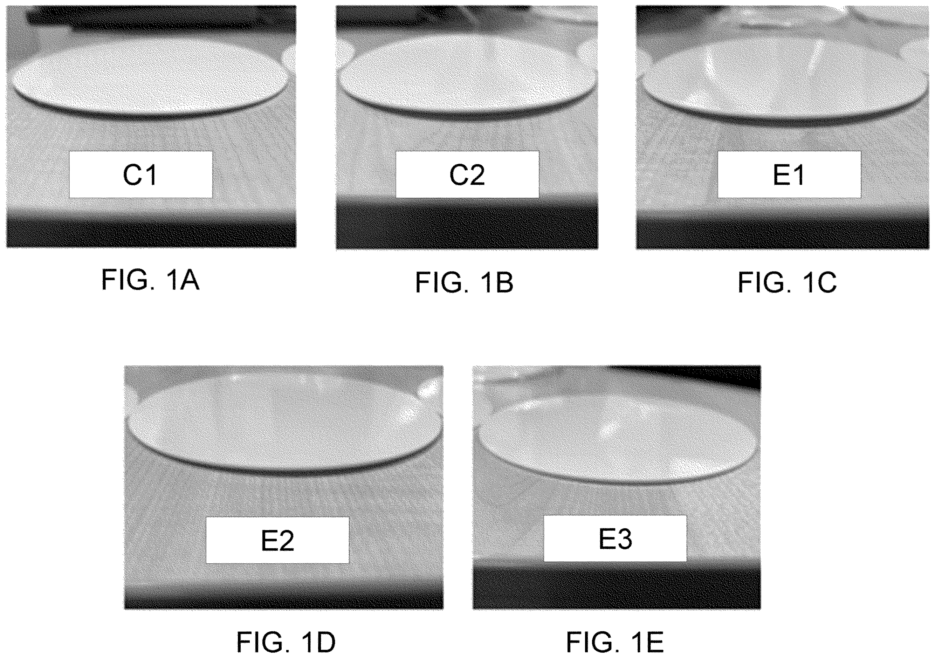

Additionally, warpage decreased as PEI content increased above 5 wt%. As demonstrated in FIGS. 1A-1E, an observable improvement in warpage was observed as the PEI content increased from 0 wt% (C1, FIG. 1A) to 20 wt% (E3, FIG. 1E).

The chemical resistance evaluations demonstrated that the example compositions including greater than 5 wt% PEI (E1-E3) had equivalent chemical resistance to that of the comparative composition with 5 wt% or less PEI (C1 and C2). As compared to PBT blends including numerous other amorphous polymers such as polycarbonate-which are known to decrease the chemical resistance of PBT-the PBT blends including a PEI polymer maintained their good chemical resistance.

The results show that example compositions according to aspects of the disclosure have good mechanical, warpage and chemical resistance properties that make them suited for numerous applications; the compositions may be especially suitable for medical device applications, and specifically materials for use in next generation high quality medical devices.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   a) from about 30 wt% to about 60 wt% of at least one crystalline or semi-crystalline polymer;
   b) from about 5 wt% to about 20 wt% of at least one polycarbonate-siloxane copolymer; and
   c) from greater than 5 wt% to less than 25 wt% of a polyetherimide (PEI) polymer,

   wherein the combined weight percent value of all components does not exceed 100 wt%, and all weight percent values are based on the total weight of the composition.

2. The thermoplastic composition according to claim 1, wherein the at least one crystalline or semi-crystalline polymer comprises at least one PBT polymer.

3. The thermoplastic composition according to claim 1 or 2, wherein the at least one polycarbonate-siloxane copolymer has a siloxane content of from about 35 wt% to about 45 wt%.

4. The thermoplastic composition according to any of claims 1 to 3, wherein the composition further comprises from greater than 0 wt% to about 20 wt% of an additional polycarbonate (PC) component in addition to the polycarbonate-siloxane copolymer.

5. The thermoplastic composition according to any of claims 1 to 4, wherein the composition further comprises from greater than 0 wt% to about 25 wt% of a flame retardant (FR) component.

6. The thermoplastic composition according to claim 5, wherein the FR component comprises a brominated FR component, a phosphorous FR component, or a combination thereof.

7. The thermoplastic composition according to claim 6, wherein the composition comprises a brominated FR component comprising polycarbonate.

8. The thermoplastic composition according to any of claims 1 to 7, wherein the composition further comprises from greater than 0 wt% to about 15 wt% of an impact modifier component comprising methacrylate-butadiene-styrene (MBS).

9. The thermoplastic composition according to any of claims 1 to 8, wherein the composition comprises from about 10 wt% to about 20 wt% of the PEI polymer.

10. The thermoplastic composition according to any of claims 1 to 9, wherein the composition further comprises from greater than 0 wt% to about 10 wt% of a flame retardant (FR) synergist component comprising an inorganic antimony compound.

11. The thermoplastic composition according to any of claims 1 to 10, wherein the composition has a notched Izod impact strength of at least 250 joules per meter (J/m) at 23 °C as tested in accordance with ASTM D256.

12. The thermoplastic composition according to any of claims 1 to 11, wherein the composition has an average warpage of no more than 0.06 inches (in) as evaluated according to a SABIC Method.

13. The thermoplastic composition according to any of claims 1 to 12, wherein the composition has a tensile stress at yield retention of at least 90% or a tensile elongation at break retention of between 80% and 139%, wherein tensile stress at yield and tensile elongation at break are evaluated before and after exposure to a germicide for 7 days under a 1% strain according to ASTM D543, and wherein tensile stress at yield and tensile elongation at break are evaluated according to ASTM D638.

14. The thermoplastic composition according to any of claims 1 to 13, wherein the composition has equivalent chemical resistance as compared to a comparative composition that does not include the PEI polymer.

15. An article comprising the thermoplastic composition according to any of claims 1 to 14, wherein the article is a component of a medical device.

FIG. 1A  FIG. 1B  FIG. 1C

FIG. 1D  FIG. 1E

EP 4 696 745 A1

FIG. 2A
Fracture (Rating 1)

FIG. 2B
Cracking (Rating 2)

FIG. 2C
Swelling (Rating 3)

FIG. 2D
No Change (Rating 4)

| | Europäisches Patentamt European Patent Office Office européen des brevets | **EUROPEAN SEARCH REPORT** | Application Number EP 24 19 4933 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/323110 A1 (BIHARI MALVIKA [US] ET AL) 12 October 2023 (2023-10-12) * examples C7, C9, C11; tables 1,3 * * claims 1-15 * ----- | 1-15 | INV. C08L67/02 |
| Y | US 2023/303833 A1 (CHENG YUNAN [CN] ET AL) 28 September 2023 (2023-09-28) * Examples * * figures 2,6,8,10; tables 1-2, 2-2, 3-2, 4-2 * ----- | 1-15 | |

| | | | TECHNICAL FIELDS SEARCHED (IPC) |
|---|---|---|---|
| | | | C09J C08G C08L |

The present search report has been drawn up for all claims

| Place of search | Date of completion of the search | Examiner |
|---|---|---|
| The Hague | 14 January 2025 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4933

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | | Publication date |
|---|---|---|---|---|
| US 2023323110 A1 | 12-10-2023 | CN | 116096816 A | 09-05-2023 |
| | | EP | 4172268 A1 | 03-05-2023 |
| | | US | 2023323110 A1 | 12-10-2023 |
| | | WO | 2022003594 A1 | 06-01-2022 |
| US 2023303833 A1 | 28-09-2023 | CN | 116323802 A | 23-06-2023 |
| | | EP | 3957680 A1 | 23-02-2022 |
| | | EP | 4196525 A1 | 21-06-2023 |
| | | JP | 2023538057 A | 06-09-2023 |
| | | KR | 20230053656 A | 21-04-2023 |
| | | US | 2023303833 A1 | 28-09-2023 |
| | | WO | 2022038517 A1 | 24-02-2022 |

EPO FORM P0459

For more details about this annex : see Official Journal of the European Patent Office, No. 12/82